# EUROPÄISCHE PATENTSCHRIFT

(11) **EP 1 530 529 B1**
(45) Veröffentlichungstag und Bekanntmachung des Hinweises auf die Patenterteilung: **23.05.2007**
(21) Anmeldenummer: 03793717.4
(22) Anmeldetag: 11.08.2003
(51) Int. Cl.: B60T 8/32, B60T 13/68

(54) **DRUCKREGELMODUL FÜR EINE DRUCKLUFT-BREMSANLAGE EINES FAHRZEUGS**
PRESSURE REGULATOR MODULE FOR A MOTOR VEHICLE PNEUMATIC BRAKING SYSTEM
MODULE REGULATEUR DE PRESSION POUR UN SYSTEME DE FREINAGE PNEUMATIQUE D'UN VEHICULE

(30) Priorität: 12.08.2002 DE 10236922
(43) Veröffentlichungstag der Anmeldung: 18.05.2005
(73) Patentinhaber: KNORR-BREMSE SYSTEME FÜR NUTZFAHRZEUGE GMBH, 80809 München (DE)
(72) Erfinder: GOEBELS, Hermann, Sheffield Village, OH 44054 (US); BEYER, Richard, E., Westlake, OH 44145 (US)
(86) Internationale Anmeldenummer: PCT/EP2003/008884
(87) Internationale Veröffentlichungsnummer: WO 2004/022397

(56) Entgegenhaltungen:
- EP-A- 0 922 618
- WO-A-02/16179
- WO-A-92/16400
- WO-A-03/033321
- CH-A- 644 314
- DE-A- 3 308 546
- DE-A- 4 227 084
- US-B1- 6 371 573

## Beschreibung

### Stand der Technik

Die Erfindung betrifft ein Druckregelmodul für eine Druckluft-Bremsanlage eines Fahrzeugs, insbesondere eines Nutzfahrzeugs, zum radschlupfabhängigen Steuern oder Regeln von an zwei separaten Arbeitsanschlüssen anliegenden Bremsdrücken, beinhaltend eine zweikanalige Ventileinheit mit je einem Relaisventil je Kanal, wobei den Steuereingängen jedes der beiden Relaisventile jeweils ein Steuermagnetventil zugeordnet ist, gemäß dem Oberbegriff von Anspruch 1.

Solche Druckregelmoduln werden zur Steuerung und Regelung des Bremsdrucks an den Fahrzeugrädern verwendet, um ein Blockieren während einer Bremsung (Anti-Blockier-System, ABS) oder ein Durchdrehen während eines Beschleunigungsvorgangs (Antriebs-Schlupf-Regelung, ASR) zu verhindern. Bekannte Anti-Blockier-Systeme bestehen aus Radgeschwindigkeitssensoren, einer elektronischen Steuer- und Regeleinheit sowie den Druckregelmoduin. Hierbei benötigt jedes individuell geregelte Rad einen Radgeschwindigkeitssensor und einen Druckregelmodul sowie eine Verbindung zur elektronischen Steuer- und Regeleinheit. ASR verwendet die gleichen Bauelemente wie ABS, verfügt aber darüber hinaus noch über ein zusätzliches Ventil, um unabhängig von der Betätigung des Bremspedals Bremsdruck an einem durchdrehenden Rad aufzubauen. Der radbezogene Radgeschwindigkeitssensor ist am jeweiligen Fahrzeugrad angeordnet, um die momentane Radgeschwindigkeit zu messen und sendet ein entsprechendes elektrisches Signal an die Steuer- und Regeleinheit, welche die von den Radgeschwindigkeitssensoren der weiteren Fahrzeugräder empfangenen Signale sowie weitere Parameter wie beispielsweise die Fahrzeuggeschwindigkeit und Fahrzeugbeschleunigung auswertet und entscheidet, ob ein oder mehrere Räder beim Bremsen oder Beschleunigen über bestimmte Werte hinaus schlupfen. Zur Vermeidung von übermäßigem Radschlupf werden dann die Druckregelmoduln von der Steuer- und Regeleinheit angesteuert, um den Bremsdruck in den betroffenen Fahrzeugrädern zu vermindern, zu erhöhen oder zu halten. Es ist weiterhin bekannt, die Druckregelmoduln der Räder einer Achse oder auch einer Achsseite zu einem einzigen, mehrkanaligen Druckregelmodul zusammenzufassen, um Bauteile und Bauraum einzusparen.

Ein gattungsgemäßes 2-Kanal-Druckregelmodul ist aus der DE 42 27 084 A1 bekannt, wobei gemäß einer ersten Ausführungsform der Entgegenhaltung eine radschlupfabhängige Regelung des Bremsdruckes für den Fall vorgesehen ist, daß die Räder einer Achse beim Bremsen blockieren (ABS). Die Ventileinheit umfaßt jeweils ein einem Relaisventil zugeordnetes Steuermagnetventil in Form eines 2/2-Wegeventils, welches den Steuereingang des zugeordneten Relaisventils entweder sperrt oder ihn mit dem Ausgang eines vorgeschalteten Entlüftungsventils verbindet, das eingangsseitig mit einem Steuerdruck und mit einer Entlüftung in Verbindung steht. Da nur ein Entlüftungsventil vorhanden ist, kann in den beiden Bremszylindern ein jeweils nur gleichgerichteter Druckauf- bzw. Druckabbau stattfinden, während gegenläufige Druckänderungen, beispielsweise Druckaufbau im einen Bremszylinder und Druckabbau im anderen Bremszylinder nicht möglich sind. Über jeweiliges Sperren der 2/2-Wegeventile sind jedoch unterschiedliche Bremsdrücke aussteuerbar. Insgesamt sind daher drei Steuermagnetventile zur Ansteuerung der beiden Relaisventile vorgesehen.

Gemäß einer weiteren Ausführungsform der Entgegenhaltung ist ein Druckregelmodul offenbart, welcher zusätzlich zu ABS beim Bremsen über ASR verfügt, welches das Durchdrehen der Räder beim Anfahren bzw. Beschleunigen verhindert. Gemäß dieser Ausführungsform sind fünf Steuermagnetventile zur Ansteuerung der beiden Relaisventile vorhanden.

Die US 6,371,573 B1 offenbart ein einkanaliges Bremssystem, bei welchem ein Relaisventil von einem 3/2-Wegeventil ansteuert wird.

Der vorliegenden Erfindung liegt die Aufgabe zugrunde, ein Druckregelmodul der eingangs erwähnten Art derart weiter zu entwickeln, daß es bei hoher Funktionalität einfach und kostengünstig herstellbar ist.

Erfindungsgemäß wird diese Aufgabe durch die kennzeichnenden Merkmale des Anspruchs 1 gelöst.

### Vorteile der Erfindung

Durch entsprechende Ansteuerung der beiden 312-Wegeschaltventilventile kann der Bremsdruck an den Arbeitsanschlüssen im Sinne eines radweisen ABS-Systems individuell vermindert, gehalten, oder gesteigert werden. Zusätzlich zu ABS kann auch eine Antriebsschlupfregelung (ASR) realisiert werden. Gegenüber einer Ausführungsform der DE 42 27 084 A1, welche ebenfalls radindividuelle ABS- und ASR- Funktionen beinhaltet, sind jedoch anstatt fünf lediglich drei Steuermagnetventile vorgesehen. Deshalb bietet die Erfindung Bauraum-, Gewichts- und Kostenersparnisse.

Außerdem ist mit dieser erfindungsgemäßen Ventilanordnung auch ein ennreitertes ABS realisierbar, bei welchem die Fahrzeugstabilität auch ohne Vorliegen einer durch den Fahrer initiierten Bremsung durch radindividuelle automatische Einsteuerung von Bremsdruck erhöht wird, um beispielsweise während einer Kurvenfahrt durch gezieltes Abbremsen ein seitliches Überrollen des Fahrzeugs zu verhindern. In beiden Fällen ist darüber hinaus der Verkabelungsaufwand geringer, außerdem sind aufgrund der geringeren Anzahl von Steuermagnetventilen auch weniger Treiber bzw. Schnittstellen notwendig.

Bei den verwendeten 3/2-Ventilen handelt es sich um einfach ausgebildete Magnet-Schaltventile, bei denen über 2 Schaltstellungen ein Druck im Sinne einer 2-Wege-Funktion entweder aufgebaut oder abgebaut werden kann. Bezogen auf die Ansteuerung der Relaisventile bedeutet dies, dass beispielsweise im nichterregten Zustand des 312-Wegeventils ein Steuerdruck zum Steueranschluss des zugeordneten Relaisventils unverändert durchgeschaltet und im Erregungsfall der Steueranschluss des Relaisventils mit einem Entlüftungsanschluss bei gleichzeitiger Sperrung des Steuerdrucks geschaltet ist. Durch einen besonderen elektrischen Ansteuermodus ist zusätzlich zum Druck-Aufbau und Druck-Abbau eine Druckhaltefunktion realisierbar, beispielsweise dadurch, dass die Steuerelektronik zum Druck-Halten die 3/2-Wegeschaltventile höherfrequent und mit einem entsprechenden Takt-Verhältnis (Einschalt- zu Ausschaltzeit) ansteuert. Dadurch wird auch der Steuerdruck des Relaisventils getaktet, wobei der Relaissteuerkolben aufgrund seiner Hysterese in seiner Mittelstellung und damit Haltefunktion verbleibt. Deshalb ist in Bezug zur ansteuernden Elektronik nur eine einfache elektrische Schaltfunktion des Stromes, beispielsweise über einen einfachen elektronischen Schalttransistor und keine aufwendige Stromregelung wie im Falle eines Proportionalventils gemäß einer weiteren Ausführungsform der DE 42 27 084 A1 erforderlich.

Bezogen auf den Funktionsumfang gelingt der Erfindung die Realisierung eines Druckregelmoduls folglich mit wenig bzw. mit kostengünstigen Steuerventilen.

Durch die in den Unteransprüchen aufgeführten Maßnahmen sind vorteilhafte Weiterbildungen und Verbesserung der im Patentanspruch 1 angegebenen Erfindung möglich.

Gemäß einer bevorzugten Ausführungsform der Erfindung sind die beiden 3/2-Wegeventile von einer elektronischen Steuer- und Regeleinrichtung unabhängig voneinander angesteuert und stehen eingangsseitig mit dem Steuerdruck und ausgangsseitig jeweils mit dem Steuereingang des zugeordneten Relaisventils und mit der Entlüftung in Verbindung.

In bevorzugter Weiterbildung schalten die beiden 3/2-Wegeventile in der unbestromten federbelasteten Grundstellung den Steuerdruck zu den Steuereingängen der Relaisventile und bestromt die Steuereingänge der Relaisventile zur Entlüftung durch.

In besonders bevorzugender Weise wird zum Druckhalten am Arbeitsanschluß des jeweiligen Kanals das zugeordnete Steuermagnetventil durch die Steuer- und Regeleinheit abwechselnd in Druckaufbau- und Druckabbaustellung hin und her geschaltet. Durch den kurzzeitig wechselweisen Druckaufbau bzw. Druckabbau wird ein quasi-konstanter Druck in einem mit dem betreffenden Arbeitsanschluß in Verbindung stehenden Bremszylinder erreicht, ohne daß hierfür weitere Maßnahmen oder Bauelemente notwendig sind.

Gemäß besonders zu bevorzugender Maßnahmen wird das weitere Steuermagnetventil durch ein von der elektronischen Steuer- und Regeleinrichtung angesteuertes weiteres 3/2-Wegeventil gebildet, welches eingangsseitig mit dem Steuerdruck und ausgangsseitig mit den Eingängen der beiden Steuermagnetventile und mit dem Druckluftvorrat in Verbindung steht. Das weitere Steuermagnetventil kann dann in der unbestromten federbelasteten Grundstellung den Steuerdruck zu den Eingängen der beiden Steuermagnetventile und bestromt die Eingänge der beiden Steuermagnetventile zum Druckluftvorrat durchschalten.

Das weitere Steuermagnetventil ist insbesondere unabhängig vom Steuerdruck und abhängig von einem beim Beschleunigen auftretenden Radschlupf durch die Regel- und Steuereinheit betätigt. Infolgedessen können die Bremszylinder unabhängig von einer Betätigung des Betriebsbremsventils mit Druck aus dem Druckluftvorrat beaufschlagt werden, um ein Durchdrehen während eines Beschleunigungsvorgangs zu vermeiden, womit die automatische Antriebs-Schlupf-Regelung verwirklicht wird.

Das weitere Steuermagnetventil ist vorzugsweise in ein die Ventileinheit aufnehmendes Gehäuse integriert. Weiterhin kann das weitere Steuermagnetventil außerhalb des die restliche, aus den beiden Relaisventilen und den zugeordneten Steuermagnetventilen bestehende Ventileinheit aufnehmenden Gehäuses angeordnet und an diese anschließbar ausgebildet sein. In diesem Fall ist es möglich, ein Druckregelmodul gemäß der ersten, lediglich die Anti-Blockier-Funktion umfassenden Alternative der Erfindung auf einfache und schnelle Weise derart aufzurüsten, daß sie zusätzlich auch eine Antriebs-Schlupf-Regelung umfaßt. Hieraus ergibt sich eine kostengünstige Modulbauweise, da basierend auf einem aus zwei Relais- und zwei Steuermagnetventilen bestehenden Grundmodul sowohl Druckluftbremsanlagen mit ABS-Funktion als auch solche mit ABS- und ASR-Funktion realisiert werden können.

In bevorzugter Weise sind die Mittelachsen der beiden Relaisventile der Ventileinheit koaxial und horizontal angeordnet. Dies erlaubt eine sehr kompakte Bauform mit nur einem einzigen zentralen Entlüftungsanschluß.

### Zeichnungen

Ausführungsbeispiele der Erfindung sind in der Zeichnung dargestellt und in der nachfolgenden Beschreibung näher erläutert. In der Zeichnung zeigt:
- Fig.1: eine schematische Darstellung eines erfindungsgemäßen 2-Kanal-Druckregelmoduls gemäß einer bevorzugten Ausführungsform,
- Fig.2: ein Bremsdruck-Zeit-Diagramm zur Veranschaulichung einer Anti-Blockier-Bremsung mit dem Druckregelmodul von Fig.1,
- Fig.3: eine schematische Darstellung eines erfindungsgemäßen 2-Kanal-Druckregelmoduls gemäß einer weiteren Ausführungsform,
- Fig.4: ein Diagramm zur Veranschaulichung einer Antriebs-Schlupf-Regelung mit dem Druckregelmodul von Fig.3,
- Fig.5: eine schematische Darstellung eines erfindungsgemäßen 2-Kanal-Druckregelmoduls gemäß einer weiteren Ausführungsform.

### Beschreibung der Ausführungsbeispiele

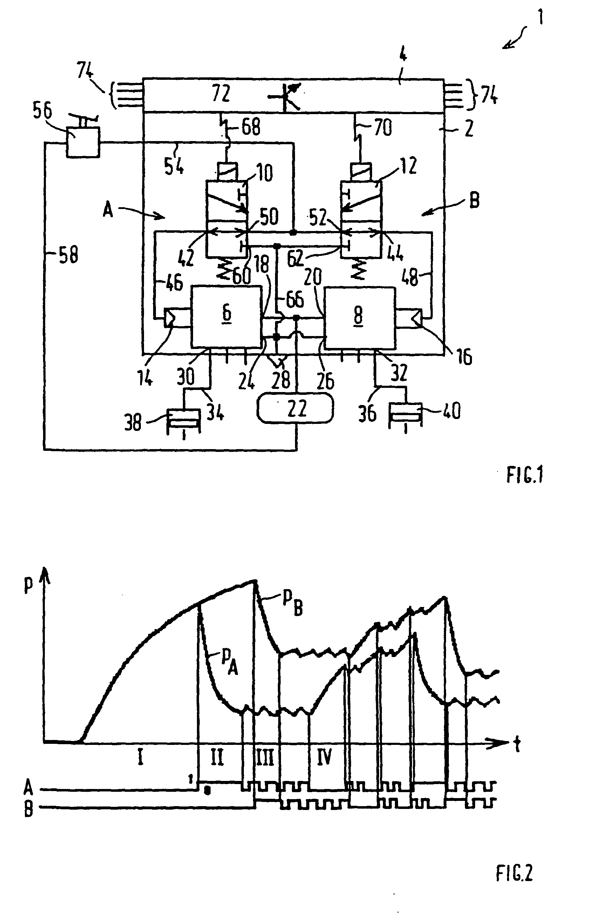

In Fig. 1 ist mit 1 ein bevorzugtes Ausführungsbeispiel eines Druckregelmoduls bezeichnet, welches gemäß der Erfindung als 2-Kanal-Druckregelmodul ausgebildet ist und eine Ventileinheit 2 sowie eine damit mechanisch und elektrisch direkt verbundene Elektronikeinheit 4 umfaßt. Das Druckregelmodul 1 ist gemäß der bevorzugten Ausführungsform in eine Druckluft-Bremsanlage eines Nutzfahrzeugs integriert.

Die Ventileinheit 2 weist zwei separate Druckregelkanäle A und B auf, die jeweils ein separates Relaisventil 6, 8 und ein diesem zugeordnetes Steuermagnetventil 10, 12 umfassen. Der pneumatische Steuereingang 14 des Relaisventils 6 von Kanal A wird von dem zugeordneten und als 3/2-Wegeventil ausgebildeten Steuermagnetventil 10 überwacht. Der pneumatische Steuereingang 16 des Relaisventils 8 von Kanal B wird von dem weiteren, ebenfalls als 3/2-Wegeventil ausgebildeten Steuermagnetventil 12 überwacht. Die beiden Steuermagnetventile 10,12 sind identisch aufgebaut und verschaltet.

Jedes der Relaisventile 6, 8 hat mehrere Anschlüsse, von welchen je ein Anschluß 18, 20 mit einem Druckluftvorrat 22 und ein weiterer Ausgang 24, 26 mit einer Entlüftung 28 in Verbindung steht. Weiterhin weist jedes Relaisventil 6, 8 einen Arbeitsanschluß 30, 32 auf, welcher über je eine Bremsleitung 34, 36 mit einem je einem Fahrzeugrad zugeordneten Bremszylinder 38, 40 verbunden ist. Die beiden Bremszylinder 38, 40 befinden sich vorzugsweise an einer Achse, beispielsweise an einer Vorder-, Hinter- oder Anhängerachse. Parallel zum dem Arbeitsanschluss 30, 32 können weitere Arbeitsanschlüsse vorhanden sein, so dass auch Bremszylinder zweier getrennter Achsen seitenweise gemeinsam geregelt werden können.

Von den jeweils drei pneumatischen Anschlüssen der beiden Steuermagnetventile 10, 12 steht je ein Anschluß 42, 44 über eine Druckluftleitung 46, 48 mit dem Steuereingang 14, 16 des zugeordneten Relaisventils 6, 8 in Verbindung. Je ein weiterer Anschluß 50, 52 der beiden Steuermagnetventile 10, 12 ist über eine Druckluftleitung 54 mit einem Betriebsbremsventil 56 verbunden, welches abhängig von seiner Betätigung durch den Fahrer einen entsprechenden Steuerdruck in die Druckluftleitung 54 aussteuert. Hierzu wird das Betriebsbremsventil 56 über eine weitere Druckluftleitung 58 mit Vorratsdruck aus dem Druckluftvorrat 22 versorgt. Schließlich ist je ein dritter Anschluß 60, 62 der Steuermagnetventile 10, 12 über eine Entlüftungsleitung 66 an die Entlüftung 28 angeschlossen.

Bei Verwendung des Druckregelmoduls 1 in einem Anhängerfahrzeug wird der Steuerdruck in der Druckluftleitung 54 über eine kuppelbare Druckluftverbindung vom Zugfahrzeug zum Anhängerfahrzeug herbeigeführt. Von dort steht der Steuerdruck wiederum in direkter oder indirekter Wirkverbindung zu dem vom Fahrer betätigten Betriebsbremsventil 56. Entsprechend ist auch der Druckluftvorrat 22 zu den Anschlüssen 18, 20 bei Verwendung im Anhängerfahrzeug der Druckluftvorrat des Anhängerfahrzeugs.

Gemäß einer in Fig.1 gezeigten federbetätigten und stromlosen Druckaufbau-Stellung der Steuermagnetventile 10, 12 schalten diese den vom Betriebsbremsventil 56 direkt oder auch indirekt erzeugten und in der Druckluftleitung 54 anstehenden Steuerdruck auf die jeweiligen Steuereingänge 14, 16 der zugeordneten Relaisventile 6, 8 durch, während sie in der bestromten Druckabbau-Stellung den jeweiligen Steuereingang 14, 16 des Relaisventils 6, 8 mit der zur Entlüftung 28 führenden Entlüftungsleitung 66 verbinden. Die beiden Steuermagnetventile 10, 12 können daher ohne Zwischenschaltung weiterer Ventile den Steuereingang 14, 16 des jeweiligen Relaisventils 6, 8 entweder mit der Entlüftung 28 oder mit dem Steuerdruck 54 verbinden.

Die Steuermagnetventile 10, 12 werden vermittels je einer elektrischen Leitung 68, 70 von einer elektronischen Steuer- und Regeleinheit 72 angesteuert. Diese umfaßt mindestens einen Mikrocomputer, welcher über eigene Intelligenz verfügt, sowie weitere, hier nicht näher bezeichnete elektronische bzw. elektrische Bauelemente, die in der Lage sind, ankommende analoge und digitale Signale zu verarbeiten.

Zu diesem Zweck verfügt die elektronische Steuer und Regeleinheit 72 über Anschlüsse 74 zum Aussenden und Empfangen von analogen und/oder digitalen Signalen und Anschlüsse 74 entsprechend der Anzahl sensierter Fahrzeugräder für das Raddrehverhalten wiedergebende Sensoreingangssignale. Die beiden Steuermagnetventile 10,12 sind von der elektronischen Steuer- und Regeleinheit 72 unabhängig voneinander ansteuerbar, insbesondere auch zur Drucksteigerung in Kanal A bei gleichzeitiger Drucksenkung in Kanal B oder umgekehrt. Wie aus Fig. 1 hervorgeht, sind außerdem die Mittelachsen der beiden Relaisventile 6, 8 koaxial und horizontal angeordnet.

Vor diesem Hintergrund ergibt sich folgende Funktionsweise des in Fig. 1 dargestellten Druckregelmoduls 1 :

Während einer normalen Betriebsbremsung befinden sich die beiden Steuermagnetventile 10, 12 in der in Fig. 1 gezeigten federbetätigten, stromlosen Druckaufbau-Stellung und der vom Betriebsbremsventil 56 erzeugte Steuerdruck wird ungehindert durch die Steuermagnetventile 10, 12 hindurch zu den Steuereingängen 14, 16 der beiden Relaisventile 6, 8 geschaltet. Proportional zu diesem Steuerdruck leiten die beiden Relaisventile 6, 8 vom Druckluftvorrat 22 ein größeres Volumen Bremsdruck in die Bremszylinder 38, 40 ein. Der Druckabbau in den Bremszylindern 38, 40 erfolgt ebenfalls proportional zum sinkenden Steuerdruck, der an den Steuereingängen 14, 16 der Relaisventile 6,8 ansteht und diese derart steuert, daß der Bremsdruck direkt über den mit der Entlüftung 28 verbundenen Ausgang 24, 26 des jeweiligen Relaisventils 6, 8 abgebaut wird.

Während einer ABS-geregelten Bremsung, bei der die Steuer- und Regeleinheit 72 überbremste Räder mit erhöhtem Radschlupf erkennt, werden die beiden jeweils ein Steuermagnetventil 10, 12 und ein zugeordnetes Relaisventil 8, 10 beinhaltenden Kanäle A, B getrennt voneinander angesteuert und somit die Zufuhr von Steuerdruck vom Betriebsbremsventil 56 zu den beiden Relaisventilen 6, 8 individuell geregelt. Mit dem erfindungsgemäßen Druckregelmodul 1 sind hierbei beispielsweise Zustände möglich, bei welchen der Steuerdruck des einen Relaisventil 8 erhöht und zugleich der Steuerdruck des anderen Relaisventils 6 abgesenkt wird und auch unterschiedliche Druckniveaus geregelt werden. Dies ist beispielsweise der Fall, wenn sich das eine Rad der Achse etwa auf Eis und das andere Rad auf trockenem, griffigen Untergrund befindet.

Fig. 2 zeigt beispielhaft die über der Zeit angetragenen Bremsdrücke p_{A}, p_{B} in den beiden Kanälen A, B bzw. Bremszylindern 38, 40 der Achse oder auch Achsen bei gemeinsamer Druckregelung während einer Bremsung mit ABS-Funktion. Die am darunterliegendem Balken angetragene Ziffer 1 bedeutet, daß das dem jeweiligen Kanal A, B oder Bremszylinder 38, 40 zugeordnete Steuermagnetventil 10, 12 bestromt und die Ziffer 0, daß das entsprechende Steuermagnetventil 10, 12 unbestromt ist.

Wie aus Fig. 2 hervorgeht, wird während einer Anbremsphase I zunächst der Druck in beiden Kanälen A, B gleichmäßig erhöht, indem beide Steuermagnetventile 10, 12 zunächst unbestromt bleiben und der vom Betriebsbremsventil 56 erzeugte Steuerdruck ungehindert zu den Steuereingängen 14, 16 der beiden Relaisventile 6, 8 gelangt, um proportionale und zunächst gleich große Bremsdrücke p_{A}, p_{B} in die beiden Bremszylinder 38, 40 einzusteuem. Überschreitet der Radschlupf unzulässige Werte an dem Kanal A zugeordneten Rad wird der Bremsdruck während einer Phase II in dem entsprechenden Bremszylinder 38 zunächst reduziert, indem das zugeordnete Steuermagnetventil 10 von der Steuer und Regeleinheit 72 bestromt und damit in Druckabbau-Stellung geschaltet wird. Während einer weiteren Phase III wird der Bremsdruck p_{A} im Kanal A auf einem annähernd konstanten Niveau dadurch gehalten, daß das dem Kanal A zugeordnete Steuermagnetventil 10 wechselweise zwischen seiner Druckaufbau-Stellung und seiner Druckabbau-Stellung hin- und hergeschaltet wird. Die Schaltpunkte liegen dabei in sehr kurzen Zeitabständen hintereinander, so daß sich am zugeordneten Bremszylinder 38 ein um einen konstanten Wert oszillierender, quasi-statischer Bremsdruck p_{A} ergibt, wie in Fig.2 gezeigt ist. Während der im Anschluß stattfindenden Phase IV wird dann der Bremsdruck p_{A} im Kanal A erhöht, um bei optimalem Radschlupf eine möglichst große Bremswirkung zu erzielen. Hierzu wird das Steuermagnetventil 10 in Druckaufbau-Stellung geschaltet.

Die Ansteuerung der beiden Kanäle A, B bzw. Bremszylinder durch die Steuer- und Regeleinheit 72 erfolgt individuell und getrennt, so daß beispielsweise eine Reduzierung des Bremsdruckes p_{A} während der Phase II im Kanal A bei gleichzeitiger weiterer Steigerung des Bremsdruckes p_{B} im Kanal B möglich ist. Hierzu werden die beiden Steuermagnetventile 10,12 gegenläufig geschaltet, d.h. daß sich das Steuermagnetventil 10 des Kanals A in Druckabbau-Stellung und gleichzeitig das Steuermagnetventil 12 des Kanals B in seiner in Fig.1 gezeigten Druckaufbau-Stellung befindet.

Bei dem zweiten Ausführungsbeispiel der Erfindung nach Fig.3 sind die gegenüber dem vorhergehenden Beispiel gleichbleibenden und gleichwirkenden Teile durch die gleichen Bezugszeichen gekennzeichnet. Im Unterschied zu diesem beinhaltet die ansonsten unveränderte Ventileinheit ein zusätzliches Steuermagnetventil 76 als 3/2-Wegeventil, welches den beiden Steuermagnetventilen 10, 12 des Kanals A und B vorgeschaltet und in ein die Ventileinheit 2 aufnehmendes Gehäuse 78 integriert ist. Das zusätzliche Steuermagnetventil 76 steht mittels einer Druckluftleitung 80 eingangsseitig mit dem aus Maßstabsgründen in Fig.3 nicht dargestellten Betriebsbremsventil oder auch kuppelbaren Druckluftverbindung für den Steuerdruck bei Anhängeranwendung und ausgangsseitig über eine Druckluftleitung 82 mit je einem Eingang 50, 52 eines Steuermagnetventils 10, 12 sowie über eine weitere Druckluftleitung 84 mit dem Druckluftvorrat 22 in Verbindung und wird über eine elektrische Leitung 86 von der Steuer- und Regeleinheit 72 angesteuert. In der unbestromten, federbelasteten Grundstellung gemäß Fig.3 schaltet das weitere Steuermagnetventil 76 den in der Leitung 80 anstehenden Steuerdruck zu den Anschlüssen 50, 52 der beiden Steuermagnetventile 10, 12 durch, während es bestromt diese Anschlüsse 50, 52 mit dem Druckluftvorrat 22 verbindet. Die beiden den Relaisventilen 6, 8 zugeordneten Steuermagnetventile 10, 12 können daher zusammen mit dem lediglich einen einzigen weiteren Steuermagnetventil 76 den Steuereingang 14, 16 des jeweiligen Relaisventils 6, 8 mit der Entlüftung 28, mit dem Steuerdruck 80 oder mit dem Druckluftvorrat 22 verbinden. Das weitere Steuermagnetventil 76 wird unabhängig vom Steuerdruck 80 und abhängig von einem beispielsweise beim Beschleunigen auftretenden Radschlupf durch die Steuer- und Regeleinheit 72 betätigt und ist vorzugsweise in die Ventileinheit 2 integriert.

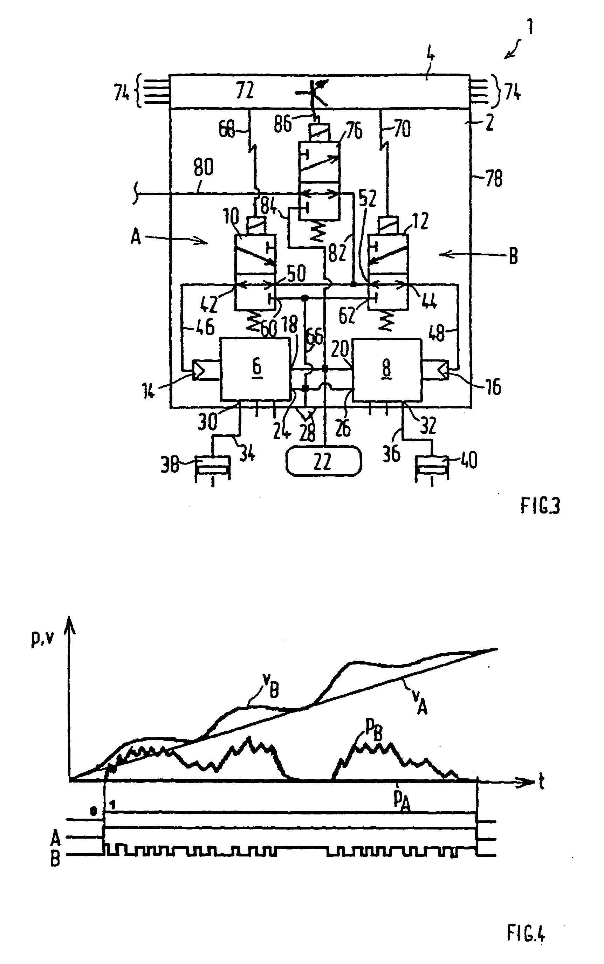

In Fig. 4 sind diagrammartig der Verlauf von Bremsdruck p_{B} und Drehgeschwindigkeit v_{B} eines angetriebenen, beim Beschleunigen anfangs durchdrehenden und durch die im Druckregelmodul 1 gemäß Fig.3 integrierte ASR-Funktion abgebremsten Rades, dem beispielsweise Kanal B des Druckregelmoduls 1 zugeordnet ist, im Vergleich zum Bremsdruck p_{A} und der Drehgeschwindigkeit v_{A} eines ebenfalls angetriebenen aber nicht unzulässig schlupfenden, dem Kanal A zugeordneten Rades gezeigt. Die Steuer- und Regeleinheit 72 erkennt das durchdrehende Rad durch einen Vergleich der Geschwindigkeiten v_{A} und v_{B}. Wenn wie im vorliegenden Fall das dem Kanal B zugeordnete Rad eine höhere Geschwindigkeit als das Rad von Kanal A aufweist, so steuert die Steuer- und Regeleinheit 72 die Ventileinheit 2 an, um Bremsdruck in den Bremszylinder 40 des durchdrehenden Rades einzusteuem, um durch Abbremsen des durchdrehenden Rades Antriebsdrehmoment auf das Rad mit der besseren Traktion zu übertragen.

Im einzelnen wird hierzu das weitere Steuermagnetventil 76 und das dem nicht durchdrehenden Rad von Kanal A zugeordnete Steuermagnetventil 10 bestromt, wie insbesondere aus dem mittleren Balkendiagramm von Fig.4 hervorgeht, in welchem eine Bestromung mit der Ziffer "1" und der stromlose Zustand durch die Ziffer "0" gekennzeichnet ist. Hierdurch gelangt Druckluft vom Druckluftvorrat 22 in den Bremszylinder 40 des durchdrehenden Rades, um es abzubremsen. Der in den Bremszylinder 40 des durchdrehenden Rades von Kanal B eingesteuerte Bremsdruck p_{B} wird dann abhängig von der Schlupfrate des durchdrehenden Rades und der Änderung der Geschwindigkeit dieses Rades geregelt, indem das dem durchdrehenden Rad zugeordnete Steuermagnetventil 12 wechselweise zwischen der Druckaufbau-Stellung und der Druckabbau-Stellung hin und her geschaltet wird, wie insbesondere aus dem unteren Balkendiagramm von Fig.4 hervorgeht. Infolgedessen nähert sich die Radgeschwindigkeit v_{B} des durchdrehenden Rades der Geschwindigkeit v_{A} des nicht durchdrehenden Antriebsrades an.

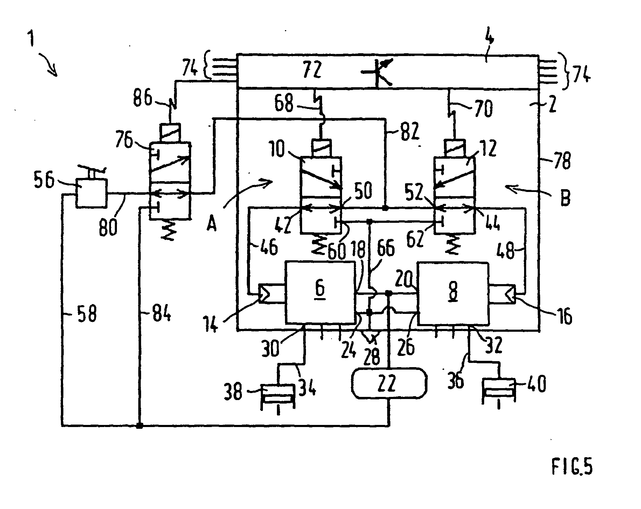

Bei der Ausführungsform von Fig.5 ist das zusätzliche Steuermagnetventil 76 nicht gemäß Fig.3 in das die Ventileinheit 2 aufnehmende Gehäuse 78 integriert, sondern außerhalb von diesem angeordnet. Genauer ist das weitere Steuermagnetventil 76 außerhalb des die restliche, aus den beiden Relaisventilen 6, 8 und den zugeordneten Steuermagnetventilen 10, 12 bestehende Ventileinheit 2 aufnehmenden Gehäuses 78 angeordnet und an die Ventileinheit 2 anschließbar ausgebildet. Man erkennt, das die im Gehäuse 78 untergebrachte restliche Ventileinheit 2 der des Ausführungsbeispiels von Fig.1 entspricht. Hierzu wird das weitere Steuermagnetventil 76 lediglich zwischen das Betriebsbremsventil 56 und die beiden Steuermagnetventile 10,12 geschaltet sowie über eine elektrische Leitung 86 an die Steuer- und Regeleinheit 72 und mittels einer Druckluftleitung 84 an den Druckluftvorrat 22 angeschlossen. Dann kann durch den Anschluß des weiteren Steuermagnetventils 76 an den Druckregelmodul 1 gemäß Fig.1 die bereits vorhandene ABS-Funktionalität zusätzlich durch ASR-Funktionen ergänzt werden.

Die Ausführungen nach Fig.3 und Fig.5 können aber auch in einem elektronisch überwachten Überrollschutzsystem Verwendung finden. Ein solches System kann in einem ABS-System integriert sein und benötigt neben entsprechender Software im Prinzip lediglich nur eine zusätzliche Information über die momentane Querbeschleunigung und eine Ventilausführung nach Fig.3 oder Fig.5. Durch Bewertung der gemessenen oder auch errechneten Querbeschleunigung zur momentanen Fahrgeschwindigkeit kann die elektronische Steuer- und Regeleinheit 72 eine mögliche Kippgefahr, beispielsweise bei einer zu schnellen Kurvenfahrt, frühzeitig erkennen. Durch Aktivieren des 3/2-Steuermagnetventils 76 und individuelles Ansteuern der nachgeschalteten Steuerventile 10 und 12 kann unabhängig von der Fahrerreaktion durch ein automatisches, blockierfreies Abbremsen des betreffenden Fahrzeugs die Fahrgeschwindigkeit reduziert und so eine mögliche Kippgefahr beseitigt werden.

Ein solches Überrollschutzsystem ist besonders wirksam in einem Anhängerfahrzeug, weil erstens die Kippgefahr selbst in der Regel vom Anhänger ausgeht und zweitens, wie bereits erwähnt nur wenig Mehraufwand zu einer ABS-Anlage benötigt wird.

Bei Integration eines Querbeschleunigungsaufnehmers in die elektronische Steuer- und Regeleinheit 72 und Ausführung der Ventileinheit 72 nach Fig.3 oder Fig.5 ist nicht nur eine sehr kompakte Einheit gegeben, sondern es wird auch der Verkabelungs- und Montageaufwand minimiert.

### Bezugszeichenliste

- 1: Druckregelmodul
- 2: Ventileinheit
- 4: Elektronikeinheit
- 6: Relaisventil
- 8: Relaisventil
- 10: Steuermagnetventil
- 12: Steuermagnetventil
- 14: Steuereingang
- 16: Steuereingang
- 18: Anschluss
- 20: Anschluss
- 22: Druckluftvorrat
- 24: Ausgang
- 26: Ausgang
- 28: Entlüftung
- 30: Arbeitsanschluß
- 32: Arbeitsanschluß
- 34: Bremsleitung
- 36: Bremsleitung
- 38: Bremszylinder
- 40: Bremszylinder
- 42: Anschluß
- 44: Anschluß
- 46: Druckluftleitung
- 48: Druckluftleitung
- 50: Anschluß
- 52: Anschluß
- 54: Druckluftleitung
- 56: Betriebsbremsventil
- 58: Druckluftleitung
- 60: Anschluß
- 62: Anschluß
- 66: Entlüftungsleitung
- 68: elektr. Leitung
- 70: elektr. Leitung
- 72: Steuer- und Regeleinheit
- 74: Anschlüsse
- 76: Steuermagnetventil
- 78: Gehäuse
- 80: Druckluftleitung
- 82: Druckluftleitung
- 84: Druckluftleitung
- 86: elektr. Leitung

## Patentansprüche

1. Druckregelmodul (1) für eine Druckluft-Bremsanlage eines Fahrzeugs, insbesondere eines Nutzfahrzeugs, zum radschlupfabhängigen Steuern oder Regeln von an zwei separaten Arbeitsanschlüssen (30, 32) anliegenden Bremsdrücken, beinhaltend eine zweikanalige Ventileinheit (2) mit je einem Relaisventil (6, 8) je Kanal (A, B), **dadurch gekennzeichnet, daß** den Steuereingängen (14, 16) jedes der beiden Relaisventile (6, 8) ohne Zwischenschaltung weiterer Ventile jeweils ein als 3/2-Wegeschaltventilventil (10, 12) mit zwei Schaltstellungen ausgebildetes Steuermagnetventil (10, 12) zugeordnet ist und die Steuermagnetventile (10, 12) zusammen mit lediglich einem einzigen weiteren, vorgeschalteten Steuermagnetventil (76) den Steuereingang (14, 16) des jeweiligen Relaisventils (6, 8) mit einer Entlüftung (28), mit einem Steuerdruck (80) oder mit einem Druckluftvorrat (22) verbinden, wobei zum Anpassen der Drehgeschwindigkeit eines angetriebenen, beim Beschleunigen anfangs schlupfenden Rades auf die Drehgeschwindigkeit eines nicht schlupfenden Rades das vorgeschaltete Steuermagnetventil (76) den Steuereingang (14, 16) des jeweiligen Relaisventils (6, 8) mit dem Druckluftvorrat (22) verbindet und das dem schlupfenden Rad zugeordnete Steuermagnetventil (10, 12) abhängig von der Schlupfrate des schlupfenden Rades und der Änderung der Geschwindigkeit dieses Rades derart angesteuert ist, dass es wechselweise zwischen einer Druckaufbaustellung und einer Druckabbaustellung hin und her geschaltet wird.

2. Druckregelmodul nach Anspruch 1, **dadurch gekennzeichnet, daß** die beiden Steuermagnetventile (10, 12) von einer elektronischen Steuer-und Regeleinheit (72) unabhängig voneinander angesteuert sind und eingangsseitig mit dem Steuerdruck (54) und ausgangsseitig jeweils mit dem Steuereingang (14, 16) des zugeordneten Relaisventils (6, 8) und mit der Entlüftung (28) in Verbindung stehen.

3. Druckregelmodul nach Anspruch 2, **dadurch gekennzeichnet, daß** die Steuermagnetventile (10, 12) in der unbestromten federbelasteten Grundstellung den Steuerdruck (54) zu den Steuereingängen (14, 16) der Relaisventile (6, 8) und bestromt die Steuereingänge (14, 16) der Relaisventile (6, 8) zur Entlüftung (28) durchschalten.

4. Druckregelmodul nach Anspruch 3, **dadurch gekennzeichnet, daß** zum Druckhalten am Arbeitsanschluß (30, 32) des jeweiligen Kanals (A, B) das zugeordnete Steuermagnetventil (10, 12) durch die Steuer- und Regeleinheit (72) abwechselnd in Druckaufbau- und Druckabbaustellung hin und her geschaltet ist.

5. Druckregelmodul nach einem der Ansprüche 2 bis 4, **dadurch gekennzeichnet, daß** das weitere Steuermagnetventil (76) durch ein von der elektronischen Steuer- und Regeleinheit (72) angesteuertes weiteres 3/2-Wegeventil gebildet wird, welches eingangsseitig mit dem Steuerdruck (80) und mit dem Druckluftvorrat (22) und ausgangsseitig mit den Eingängen (50, 52) der beiden Steuermagnetventile (10, 12) in Verbindung steht.

6. Druckregelmodul nach Anspruch 5, **dadurch gekennzeichnet, daß** das weitere Steuermagnetventil (76) in der unbestromten federbelasteten Grundstellung den Steuerdruck (80) zu den Eingängen (50, 52) der beiden Steuermagnetventile (10, 12) und bestromt die Eingänge (50, 52) der beiden Steuermagnetventile (10, 12) zum Druckluftvorrat (22) durchschaltet.

7. Druckregelmodul nach Anspruch 6, **dadurch gekennzeichnet, daß** das weitere Steuermagnetventil (76) unabhängig vom Steuerdruck (80) und abhängig von einem beim Beschleunigen auftretenden Radschlupf oder von der Querbeschleunigung betätigt ist.

8. Druckregelmodul nach Anspruch 7, **dadurch gekennzeichnet, daß** das weitere Steuermagnetventil (76) in ein die Ventileinheit (2) aufnehmendes Gehäuse (78) integriert ist.

9. Druckregelmodul nach Anspruch 8, **dadurch gekennzeichnet, daß** das weitere Steuermagnetventil (76) außerhalb eines die restliche, aus den beiden Relaisventilen (6, 8) und den zugeordneten Steuermagnetventilen (10, 12) bestehende Ventileinheit (2) aufnehmenden Gehäuses (78) angeordnet und an diese anschließbar ausgebildet ist.

10. Druckregelmodul nach einem der vorhergehenden Ansprüche, **dadurch gekennzeichnet, daß** die Mittelachsen der beiden Relaisventile (6, 8) koaxial und horizontal angeordnet sind.

11. Druckregelmodul nach einem der vorhergehenden Ansprüche, **dadurch gekennzeichnet, daß** ein Beschleunigungsaufnehmer zur Erfassung der Querbeschleunigung vorgesehen ist, welcher vorzugsweise in der Elektronikeinheit (4) integriert ist.

## Claims

1. A pressure regulator module (1) for a pneumatic braking system of a motor vehicle, in particular a utility vehicle, for controlling or regulating dependent on wheel slip brake pressures present at two separate service connections (30, 32), containing a bi-channel valve unit (2) with one relay valve (6, 8) per channel (A, B),
**characterised in that**
a control solenoid valve (10,12) designed as a 3/2-way switching valve (10,12) with two switching positions is are assigned to the control inputs (14,16) of each of the two relay valves (6, 8) without the interposing of further valves, and the control solenoid valves (10, 12) - together with only one single further upstream control solenoid valve (76) - connect the control input (14,16) of the relay valve (6, 8) to a ventilation device (28), to a control pressure (80) or to a compressed air reserve (22), the upstream control solenoid valve (76) connecting the control input (14, 16) of the relay valve (6, 8) to the compressed air reserve (10, 12) in order to adjust the speed of rotation of a driven wheel which slips at the start of acceleration to the speed of rotation of a non-slipping wheel, and the control solenoid valve (10, 12) assigned to the slipping wheel is initiated dependent on the slip rate of the slipping wheel and the change in speed of this wheel in such a manner that it is switched alternately between a pressure increasing position and a pressure decreasing position.

2. A pressure regulator module in accordance with claim 1,
**characterised in that**
the two control solenoid valves (10,12) are initiated independently of one another by an electronic control and regulation unit (72) and are connected on the input side to the control pressure (54), on the output side to the control output (14, 16) of the assigned relay valve (6, 8) and to the ventilation device (28).

3. A pressure regulator module in accordance with claim 2,
**characterised in that**
the control solenoid valves (10,12) switch the control pressure (54) to the control inputs (14, 16) of the relay valves (6, 8) in the de-energized, springloaded basic position and switch the control inputs (14,16) of the relay valves (6, 8) to the ventilation device (28) in the energized position.

4. A pressure regulator module in accordance with claim 3,
**characterised in that**
in order to maintain the pressure at the service connection (30, 32) of the relevant channel (A, B) the assigned control solenoid valve (10, 12) is switched alternately back and forth between the pressure increasing and pressure decreasing position by the control and regulation unit (72).

5. A pressure regulator module in accordance with one of claims 2 to 4,
**characterised in that**
the further control solenoid valve (76) takes the form of a further 3/2-way switching valve which is initiated by the electronic control and regulation unit (72) and connected on the input side to the control pressure (80) and the compressed air reserve (22) and on the output side to the inputs (50, 52) of the two control solenoid valves (10, 12).

6. A pressure regulator module in accordance with claim 5,
**characterised in that**
the further control solenoid valve (76) switches the control pressure (80) to the inputs (50, 52) of the two control solenoid valves (10, 12) when in the de-energized, spring loaded basic position and switches the inputs (50, 52) of the two control solenoid valves (10, 12) to the compressed air reserve (22) when energized.

7. A pressure regulator module in accordance with claim 6,
**characterised in that**
the further control solenoid valve (76) is actuated independently of the control pressure (80) and dependent on a wheel slip occurring during acceleration or on the transverse acceleration.

8. A pressure regulator module in accordance with claim 7,
**characterised in that**
the control further solenoid valve (76) is integrated in a housing (78) receiving the valve unit (2).

9. A pressure regulator module in accordance with claim 8,
**characterised in that**
the control further solenoid valve (76) is positioned outside a housing (78) receiving the remaining valve unit (2) consisting of the two relay valves (6, 8) and the assigned control solenoid valves (10, 12), and is designed such that it can be connected thereto.

10. A pressure regulator module in accordance with one of the preceding claims,
**characterised in that**
the centre lines of the two relay valves (6, 8) are positioned coaxially and horizontally.

11. A pressure regulator module in accordance with one of the preceding claims,
**characterised in that**
an accelerator sensor provided to record the transverse acceleration is preferably integrated in the electronics unit (4).

## Revendications

1. Module régulateur de pression (1) pour un système de freinage pneumatique d'un véhicule, en particulier d'un véhicule utilitaire, pour la commande ou régulation, en fonction du patinage de roue, de pressions de freinage s'appliquant à deux raccords de travail (30, 32) séparés, comprenant une unité de valve à deux canaux (2) ayant respectivement une valve-relais (6, 8) par canal (A, B), **caractérisé en ce que** respectivement une électrovanne de commande (10, 12), constituée en tant que soupape de commande 3/2 voies (10, 12) ayant deux positions de commande, est affectée aux entrées de commande (14, 16) de chacune des deux valves-relais (6, 8), sans intercalation d'autres valves, et les électrovannes de commande (10, 12), de concert avec seulement une autre électrovanne de commande (76) montée en amont, raccordent l'entrée de commande (14, 16) de la valve-relais (6, 8) respective à une évacuation d'air (28), à une pression de commande (80) ou à un réservoir d'air comprimé (22), l'électrovanne de commande (76) montée en amont raccordant l'entrée de commande (14, 16) de la valve-relais (6, 8) respective au réservoir d'air comprimé (22), pour l'adaptation de la vitesse de rotation d'une roue entraînée, qui patine initialement lors de l'accélération, à la vitesse de rotation d'un roue qui ne patine pas, et l'électrovanne de commande (10, 12) affectée à la roue qui patine étant pilotée, en fonction du taux de patinage de la roue qui patine et de la variation de la vitesse de cette roue, de sorte qu'elle est commutée alternativement entre une position de constitution de pression et une position de suppression de pression.

2. Module régulateur de pression selon la revendication 1, **caractérisé en ce que** les deux électrovannes de commande (10, 12) sont pilotées indépendamment l'une de l'autre par une unité de commande et de régulation électronique (72) et sont, côté entrée, en liaison avec la pression de commande (54) et, côté sortie, respectivement avec l'entrée de commande (14, 16) de la valve-relais (6, 8) affectée et avec l'évacuation d'air (28).

3. Module régulateur de pression selon la revendication 2, **caractérisé en ce que** les électrovannes de commande (10, 12), dans la position de base chargée par ressort, quand elles ne sont pas alimentées en courant, raccordent la pression de commande (54) aux entrées de commande (14, 16) des valves-relais (6, 8) et, quand elles sont alimentées en courant, raccordent les entrées de commande (14, 16) des valves-relais (6, 8) à l'évacuation d'air (28).

4. Module régulateur de pression selon la revendication 3, **caractérisé en ce que**, pour maintenir la pression sur le raccord de travail (30, 32) du canal (A, B) respectif, l'électrovanne de commande (10, 12) affectée est, par l'unité de commande et de régulation électronique (72), commutée alternativement dans la position de constitution de pression et dans la position de suppression de pression.

5. Module régulateur de pression selon une des revendications 2 à 4, **caractérisé en ce que** l'autre électrovanne de commande (76) est formée par une autre vanne 3/2 voies qui est pilotée par l'unité de commande et de régulation électronique (72) et qui est en liaison, côté entrée, avec la pression de commande (80) et avec le réservoir d'air comprimé (22) et, côté sortie, avec les entrées (50, 52) des deux électrovannes de commande (10, 12).

6. Module régulateur de pression selon la revendication 5, **caractérisé en ce que** l'autre électrovanne de commande (76), dans la position de base chargée par ressort et non alimentée en courant, raccorde la pression de commande (80) aux entrées (50, 52) des deux électrovannes de commande (10, 12) et, quand elle est alimentée en courant, raccorde les entrées (50, 52) des deux électrovannes de commande (10, 12) au réservoir d'air comprimé (22).

7. Module régulateur de pression selon la revendication 6, **caractérisé en ce que** l'autre électrovanne de commande (76) est actionnée indépendamment de la pression de commande (80) et en fonction d'un patinage de roue apparaissant lors de l'accélération ou en fonction de l'accélération transversale.

8. Module régulateur de pression selon la revendication 7, **caractérisé en ce que** l'autre électrovanne de commande (76) est intégrée dans un boîtier (78) logeant l'unité de valve (2).

9. Module régulateur de pression selon la revendication 8, **caractérisé en ce que** l'autre électrovanne de commande (76) est disposée à l'extérieur d'un boîtier (78) logeant le reste de l'unité de valve (2) composée des deux valves-relais (6, 8) et des électrovannes de commande (10, 12) affectées, et est constituée de façon à pouvoir être raccordée à celles-ci.

10. Module régulateur de pression selon une des revendications précédentes, **caractérisé en ce que** les axes médians des deux valves-relais (6, 8) sont disposés de façon coaxiale et horizontale.

11. Module régulateur de pression selon une des revendications précédentes, **caractérisé en ce qu'**un enregistreur d'accélération est prévu pour détecter l'accélération transversale, et est de préférence intégré dans l'unité électronique (4).
